# EUROPEAN PATENT APPLICATION

(11) **EP 1 065 612 A2**
(43) Date of publication of application: **03.01.2001**
(21) Application number: 00113158.0
(22) Date of filing: 29.06.2000
(51) Int. Cl.: G06F 17/60

(54) **System and method for promoting distribution of used parts**

(30) Priority: 29.06.1999 JP 18439799
(71) Applicant: TSUBASA SYSTEM CO. LTD., Tokyo (JP)
(72) Inventor: Kera, Shozo, Tsubasa System Co., Ltd., Koutou-ku, Tokyo (JP); Mizutani, Teji, Tsubasa System Co., Ltd., Koutou-ku, Tokyo (JP)
(74) Representative: Modiano, Guido, Dr.-Ing.

(57) **Abstract**

To provide a system and a method for enabling consumers of used cars to readily grasp data of used cars supplied from used car suppliers. A main server (1), a terminal (3) on the side of a used car supplier, a terminal (2) on the side of a consumer of used cars and a terminal (4) on the side of a user of used parts are connected over a network (10), and the main server (1) is connected to: a parts car database (6) for storing used car stock data transmitted from the terminal (3) on the side of a used car supplier; a vehicle database (5) for storing detailed data of vehicles including parts list corresponding to the respective vehicle models; and an integrated database (7) for storing used parts data transmitted from the terminal (2) on the side of a consumer of used cars, revises the used car stock data based on the detailed data of vehicles in the vehicle database (5) corresponding to the used car stock data stored in the parts car database (6), and transmits the used parts data in the integrated database (7) to the terminal (4) on the side of a user of used parts.

## Description

### BACKGROUND OF THE INVENTION

### 1. Field of the Invention

The present invention relates to a system and a method for promoting distribution of used parts, more specifically to a network system for promoting distribution of used parts of automobiles.

### Description of the Related Art

When repairing an automobile that has been damaged in an accident and the like, replacement of parts is required in most cases.

In such a case, either new or used parts may be used but demands for used parts are increasing, for they are available at a cost approximately one third the price of new parts.

Used parts are taken from scrapped cars for taking parts (parts cars) and there were 4 million 500 thousand parts cars in 1997 according to the Japanese Automobile Yearbook of 1998.

Using such used parts allows inexpensive repairs of automobiles, which offers great advantages especially for insurance companies and companies dealing in sales of used cars.

This is because insurance companies are in the position to compensate for expenses on repairs incurred due to accidents and companies dealing in sales of used cars can repair automobiles less expensively than sheet metal processing repairs by exchanging for example a door and the like with used parts and resell them. In addition, from the view point of saving resources, recycling of parts are recommended.

As a result of such circumstances, there is a case in which these traders establish a database utilizing a computer network (Internet) that has been advanced rapidly in recent years and share information for used parts in-house or between cooperating companies.

However, because the above-mentioned database is no more than the one shared in-house or between cooperating companies, there is a problem in that the database cannot be utilized by auto dismantlers / used parts dealers concerned that actually supply used parts and mechanics / sheet metal workers concerned that actually repair automobiles. These traders currently use telephones or facsimiles for exchanging information and the fact of the matter is that only very limited information is obtained. Due to this, stocks of parts increase and distribution is delayed.

Further, although there are needs for used parts among general consumers, they can presently find parts only by actually visiting auto dismantlers, which is insufficient for efficient utilization of parts.

### SUMMARY OF THE INVENTION

The present invention has been devised in view of the above and other drawbacks and, an object of the present invention is therefore to provide a system and a method for enabling consumers of used cars such as used parts dealers and auto dismantlers to readily grasp data of used cars supplied by used car suppliers such as insurance companies and companies dealing in sales of used cars.

In addition, another object of the present invention is to provide a system and a method for revising data of used cars supplied by used car suppliers to data convenient for consumers of used cars.

Still another object of the present invention is to provide a system and a method with which sales and purchases of used cars can be smoothly carried out between used car suppliers and consumers of used cars.

Yet another object of the present invention is to provide a system and a method for enabling users of used parts to easily grasp data of used parts supplied by used parts suppliers (consumers of used cars).

Yet another object of the present invention is to provide a system and a method with which sales and purchases of used parts can be smoothly conducted between used parts suppliers and users of used parts.

Yet another object of the present invention is to provide a system and a method for enabling a large number of users of used parts to obtain detailed and widely ranged information for used parts.

A system in accordance with a first aspect of the present invention is characterized in that a main server, a terminal on the side of a used car supplier, a terminal on the side of a consumer of used cars and a terminal on the side of a user of used parts are connected over a network, and the main server is connected to: a first storing means for storing used car stock data transmitted from the terminal on the side of a used car supplier; a second storing means for storing detailed data of vehicles including parts list corresponding to the respective vehicle models; and a third storing means for storing used parts data transmitted from the terminal on the side of a consumer of used cars, the main server complementing the used car stock data based on the detailed data of vehicles in the second storing means corresponding to the used car stock data stored in the first storing means, and the main server transmitting the used parts data in the third storing means to the terminal on the side of a user of used parts.

The main server can be equipped with auctioning means for selecting prospective purchase data with the highest price out of prospective purchase data transmitted from the terminal on the side of a consumer of used cars with respect to the used car stock data stored in the first storing means. Here, prospective purchase data indicates purchase prices bid by the respective consumers of a used car corresponding to the used car stock data.

In addition, the main server can be equipped with delivering means for receiving a used car reservation request from the terminal on the side of a consumer of used cars and for automatically transmitting data of the corresponding used car to the terminal on the side of the consumer of used cars who made the request.

Further, the main server can be equipped with delivering means for receiving a used parts reservation request from the terminal on the side of a user of used parts and for automatically transmitting data of the corresponding used parts to the terminal of the user of the used parts who made the request.

Moreover, each of vehicle data to be stored in the first storing means, the second storing means and the third storing means may include at least type designation number data, class division number data and year of manufacture data for each data of the respective vehicles.

A method in accordance with a second aspect of the present invention is a method for transmitting data of used cars and of used parts between a main server and a plurality of terminals connected over a network to promote distribution of used parts, and is characterized comprising the steps of: transmitting used car stock data from a terminal of a used car supplier to the main server; complementing the used car stock data based on detailed data of vehicles including a parts list corresponding to the respective vehicle models, transmitting the complemented used car stock data from the main server to a terminal of a consumer of used cars; transmitting used parts data from the terminal of a consumer of used cars to the main server; and transmitting the used parts data from the main server to a terminal of a user of used parts.

In the step of complementing the used car stock data, lacking data obtained through retrieval of data corresponding to the used car stock data in a storing apparatus storing detailed data of vehicles may be added to the used car stock data transmitted from the terminal on the side of a used car supplier to the main server.

The terminal on the side of a user of used parts means general terminals that can be connected to the Internet, not to mention ones owned by automobile repairers.

In addition, data can be voluntarily added to the first storing means (parts car data base) from a terminal on the side of a used car supplier.

The first storing means can be utilized as a complete data base because lacking data (for example, shape of a body, grade and so on) for each specific vehicle stored in the first storing means are automatically complemented from the second string means simply by inputting some items among descriptions on documents such as a vehicle inspection paper or a vehicle history when a used car is on the market.

Further, the auctioning means provided in the main server can show as an example a trade through a bidding up method and a current auction price is renewed when a bid price is newly transmitted from a terminal of a consumer of used cars. After the lapse of a fixed period of time, the auction item in question is knocked down at the highest price.

A DOS/V based personal computer or a mini computer can be utilized as the main server, which has a www browser operable on various kinds of OS (Windows 98, Windows NT, Linux, UNIX). In addition, the NTT public lines, other wired public lines and wireless public lines such as those for cellular phones and PHSs can be used as a public network.

The connection between wired public lines and terminals such as the main server is established via a modem for analog lines and via a line terminating apparatus (DSU) and a terminal adapter (TA) for digital lines (ISDN). The transmission speed is, for example, 56 kbps at a maximum for analog lines and 64 kbps for digital lines (synchronous connection mode).

With the above-mentioned system, anybody can share information for used parts and even general consumers can acquire parts, not to mention traders. Moreover, traders can take part in an auction for desired used cars (used parts) owing to the auctioning means and can form a parts market. In addition, those who wish to purchase used cars or used parts can send a reservation request for used cars or used parts to the main server (an administrator of the main server) and can receive automatic delivery of the data at their own addresses.

Further, the type designating number means a number designated by the Ministry of Transportation for each type of vehicles. The class division number means a number uniquely given by each automobile manufacturer to various kinds of vehicles manufactured (with different grades and the like) for each designated number of types.

The type designating number or the class division number may be a number for identifying the respective vehicle models uniquely given by an automobile dealer, an automobile repairer and the like. That is, a union of automobile repairers may uniquely give (determine) a number for each vehicle model and apply the number to the system and the method of the present invention.

According to the present invention, a system and a method for enabling consumers of used cars to readily grasp used car data supplied by used car suppliers can be provided.

In addition, a system and a method for revising used car data supplied by used car suppliers to data convenient for consumers of used cars.

Further, a system and a method that can smoothly carry out sales and purchases of used cars between used car suppliers and consumers of used cars.

Moreover, a system and a method for enabling users of used parts to easily grasp data of used parts supplied by used parts suppliers (consumers of used cars).

Furthermore, a system and a method that can smoothly carry out sales and purchases of used parts between used parts suppliers and users of used parts.

Still more, a system and a method for enabling a large number of people who use the system and the method to obtain detailed and widely ranged information for used parts.

According to the present invention, people utilizing the system and the method including general consumers can readily retrieve information on parts by making databases of used parts for automobiles over a network open to public, whereby smooth and prompt distribution and utilization of parts are promoted.

Further, the retrieval of information on used parts becomes more easy through arrangement of used parts into databases by classifying used parts by type designating numbers, class division numbers and years of manufacture, and purchase reservations for used cars and used parts becomes possible by adding an automatic delivery system, which can promote more smooth distribution.

### BRIEF DESCRIPTION OF THE DRAWINGS

In the accompanying drawings:
Fig. 1 is a block diagram showing an entire system for promoting distribution of used parts in accordance with an embodiment of the present invention;
Fig. 2 is a block diagram showing hardware of a system for promoting distribution of used parts in accordance with an embodiment of the present invention;
Fig. 3 is a block diagram showing a distribution rout of data in a system for promoting distribution of used parts in accordance with the present invention;
Fig. 4 illustrates "an example of vehicle information to be registered in a parts car database" for explaining an operation of a system for promoting distribution of used parts in accordance with an embodiment of the present invention;
Fig. 5 illustrates "an example of a parts car database" for explaining an operation of a system for promoting distribution of used parts in accordance with an embodiment of the present invention;
Fig. 6 illustrates "an example of vehicle information to be delivered to used parts dealers" for explaining an operation of a system for promoting distribution of used parts in accordance with the present invention;
Fig. 7 illustrates "an example of a used parts data to be registered in an automobile information integrated database" for explaining an operation of a system for promoting distribution of used parts in accordance with an embodiment of the present invention;
Fig. 8 illustrates "an example of an established used parts database" for explaining an operation of a system for promoting distribution of used parts in accordance with an embodiment of the present invention;
Fig. 9 illustrates a retrieval screen for explaining an operation of a system for promoting distribution of used parts in accordance with an embodiment of the present invention; and
Fig. 10 illustrates "an example of a display of parts data" for explaining an operation of a system for promoting distribution of used parts in accordance with an embodiment of the present invention.

### DETAILED DESCRIPTION OF THE PREFERRED EMBODIMENTS

A system and a method for promoting distribution of used parts according to the present invention will now be described with reference to the attached drawings.

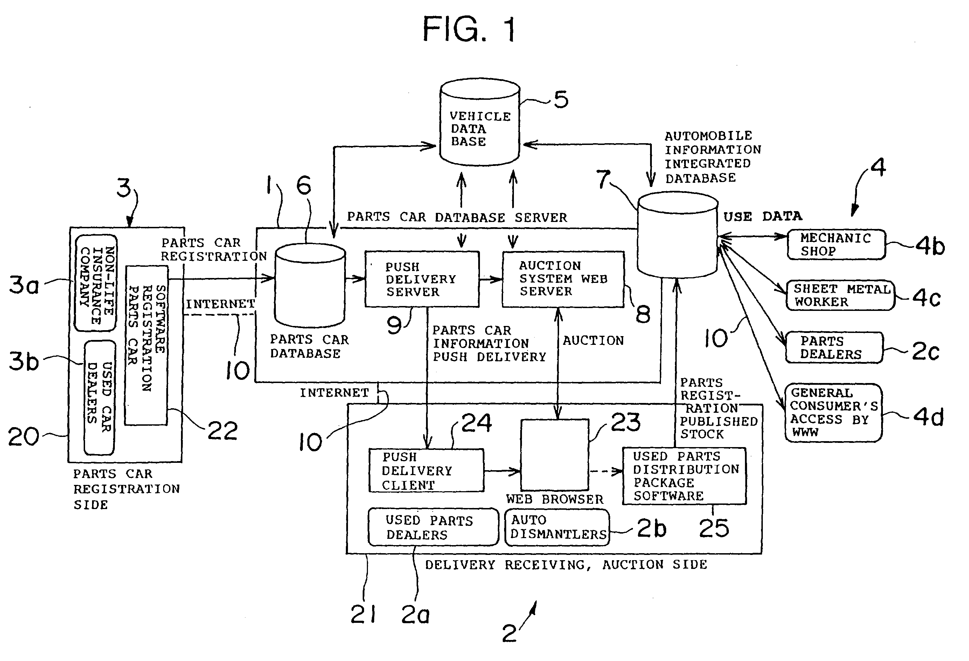

Fig. 1 is a block diagram showing the entire system for promoting distribution of used parts according to the present invention.

This system is a system including databases provided over a public network 10 but it goes without saying that the system may be utilized through a local area network in an internal use as in intra-office communication.

A main server 1 also has the function of a provider and is connected to a terminal 2 on the side of used parts suppliers (a terminal on the side of consumers of used cars), a terminal 3 on the side of a used car suppliers and a terminal 4 on the side of users of used parts.

The terminal 3 on the side of used car suppliers forms a host 20 on the side of parts car registration by putting together terminals such as a terminal 3a of a non-life insurance company and a terminal 3b of a used car dealers, both of which are being a used car suppliers, and can exchange data with the main server 1 by using parts car registration software 22.

The main server 1 is provided with a parts car database (first storing means)6 for storing data of parts cars transmitted from the host 20 on the side of parts car registration, a vehicle database (second storing means) 5 for storing detailed vehicle data of each vehicle and an integrated database (third storing means) 7 for storing used parts data transmitted from the terminal 2 on the side of used parts suppliers.

These databases 5, 6 and 7 are provided within a hard disc as a storing medium and are not necessarily stored in independent storing media.

Data to be stored in the databases 5, 6 and 7 are stored while being linked at least to data of "type designating number", "class division number" and "year of manufacture" for each vehicle or each part.

The vehicle database 5 is also connected to an auction system web server 8 as auctioning means and to a push delivery server 9 as delivering means (delivery system) in addition to the parts car database 6 and the integrated database 7.

The delivery system is for receiving a used car reservation request from each terminal 2 on the side of consumers of used cars and for automatically forwarding data of the used car to an address of a terminal that made the request. That is, the push delivery server 9 forwards data to a push delivery client 24 via the public network 10.

In addition, an auctioning system is for carrying out a trade by means of, for example, a bidding up method in which a current auction price is renewed when a bid price is newly transmitted from one of the terminals 2 on the side of consumers of used cars to the main server 1, and after the lapse of a fixed period of time, the auction item in question is knocked down at the highest price. That is, the auction system web server 8 performs auction data processing via a web browser 23. When the auction is completed, the terminal 2 transmits detailed used parts data to the integrated database 7 by using a used parts distribution package software 25.

Further, each of the terminals 2a and 2b of a used car parts dealer and an auto dismantler (the terminal 2 on the side of consumers of used cars and the terminal 2 on the side of used parts suppliers) is a client 21 on the side of those who receive delivered data and take part in an auction.

The integrated database 7 is connected to: a mechanic shop terminal 4b; a sheet metal worker terminal 4c; a parts dealer terminal 2c; and a general consumer terminal by www (world wide web) 4d via the public network 10.

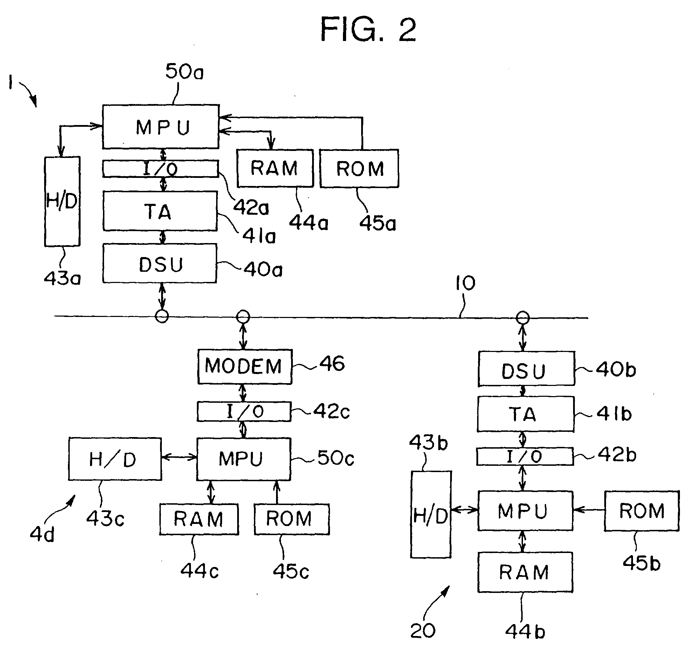

BackWeb Infocenter 4.0 of Cresco, Ltd., for example, can be used as the above-mentioned information delivery system and can be configured as shown in Fig. 2. To describe the outline of the system, a main server 1, a host 20 on the side of parts car registration and a general consumer terminal 4d are connected over a public network 10. That is, in the main server 1, a terminal adapter (TA) 41a is connected to the public network 10 via a digital service unit (DSU) 40a and an input/output port (I/O) 42a is also connected thereto. The input/output port (I/O) 42a is connected to a micro processing unit (MPU) 50a. The micro processing unit (MPU) 50a is connected to a random access memory (RAM) 44a, a read only memory (ROM) 45a and a hard disc 43a, and the main server 1 is given a function as a server by the above-mentioned software.

Similarly, in the host 20 on the side of parts car registration, a terminal adapter (TA) 41b is connected to the public network 10 via a digital service unit (DSU) 40b and an input/output port (I/O) 42b is also connected thereto. The input/output (I/O) 42b is connected to a micro processing unit (MPU) 50b. The micro processing unit (MPU) 50b is connected to a random access memory (RAM) 44b, a read only memory (ROM) 45b and a hard disc 43b.

In the general consumer terminal 4d, an input/output port (I/O) port 42c is connected to the public network 10 via a modem 46. The input/output port (I/O) 42c is connected to a micro processing unit (MPU) 50c. The micro processing unit (MPU) 50c is connected to a random access memory (RAM) 44c, a read only memory (ROM) 45c and a hard disc 43c.

Further, although a digital line and an analog line are expressed by similar lines in Fig. 2, the main server 1 is actually connected to both of a digital and an analog line and handle terminals of both systems. Communication is made on an analog line via the modem 46.

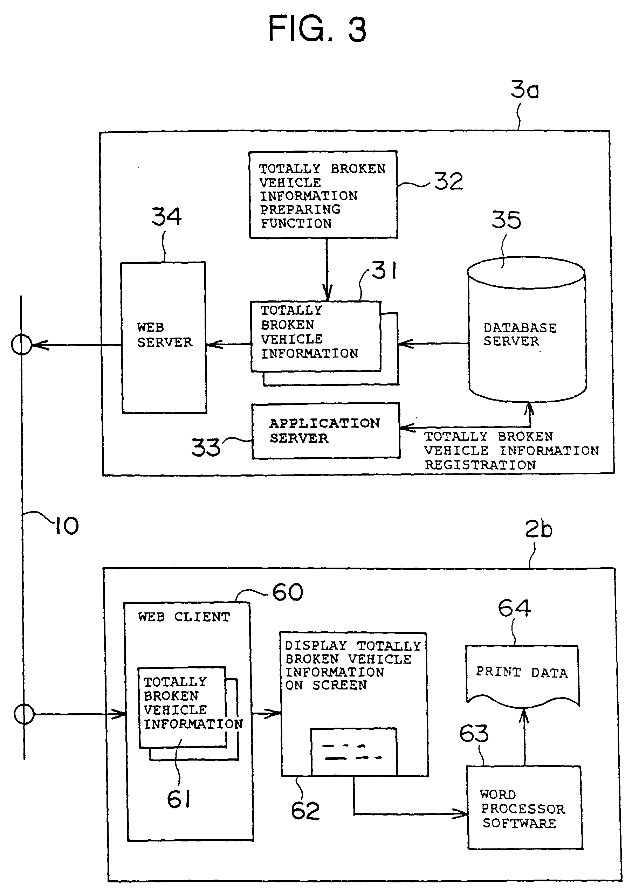

Although any terminal is substantially similar in a hardware configuration itself as described above, operations are different due to the difference in software. Examples of configuration for a terminal 3 on the side of used car supplier (a terminal 3a on the side of a non-life insurance company) and a terminal on the side of consumers of used cars (a terminal 2b on the side of auto dismantlers) are shown in Fig. 3.

The function of the terminal 3 on the side of used car suppliers is mainly to register damaged cars available for sale and prepares totally broken vehicle information 31 by a totally broken vehicle information preparing function 32. The prepared information is forwarded to the public network 10 from a web server 34 together with data from a database server 35 controlled by an application server 33.

Then, the data is decoded into totally broken vehicle information 61 in a web client (system) 60 of an auto dismantler 2b and its contents are displayed on a displaying portion 62. The totally broken vehicle information is printed (64) by word processor software 63.

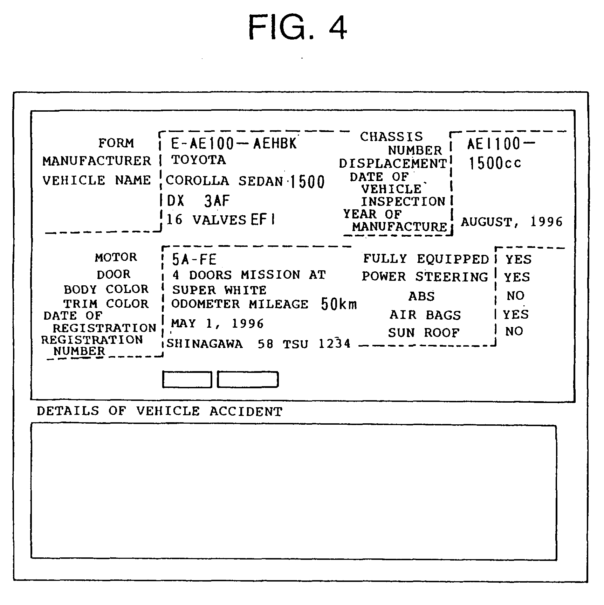

Incidentally, vehicle identifying data, items described in a vehicle inspection certificate shown in Fig. 4 and detailed parts list are stored in the vehicle database 5 for each type designating number, class division number and year of manufacture information.

As a result, data in the parts car database 6 can be revised using data in the vehicle database 5. Therefore, since lacking data in the data registered in the parts car database 6 is automatically complemented from the vehicle database 5 simply by inputting some items described in a vehicle inspection certificate, the parts car database 6 can be utilized as a complete database.

In the above-mentioned configuration, how to use the system and displayed contents will now be described concretely with reference to Fig. 4 and subsequent drawings. First, the terminal 3 on the side of used car suppliers (the terminal 3a on the side of a non-life insurance company, the terminal 3b on the side of a used car dealer) inputs data of a vehicle to be registered in the parts car database 6 in accordance with a form shown in Fig. 4. To be more specific, a type designating number, a name of a manufacturer, a vehicle model (class division number), a chassis number, a displacement, a date of vehicle inspection, a year of manufacture, a form of a motor, a type of a door, a color of a body, a trim color, odometer mileage, a date of registration, a registration number and so on are input. In addition, data such as on whether the vehicle is fully equipped or not, whether a vehicle has power steering, ABS (anti-lock braking system), air bags, a sun roof and so on are also input. Further, digital video data of the vehicle may be added in order to clarify the current status of the vehicle.

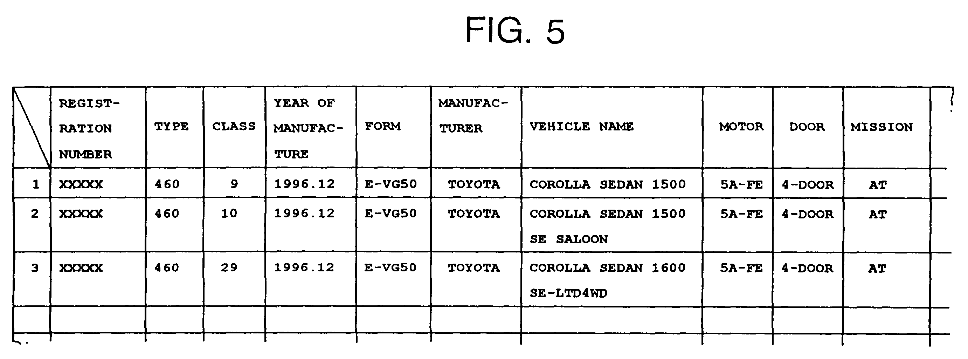

Data shown in Fig. 5 is stored in the parts car database 6. Here, considering data management of a non-life insurance company, since each non-life insurance company manages vehicle information using its own format, the format may lack any predetermined items shown in Fig. 5. Hence, the lacking information is complemented based on the data in the vehicle database 5.

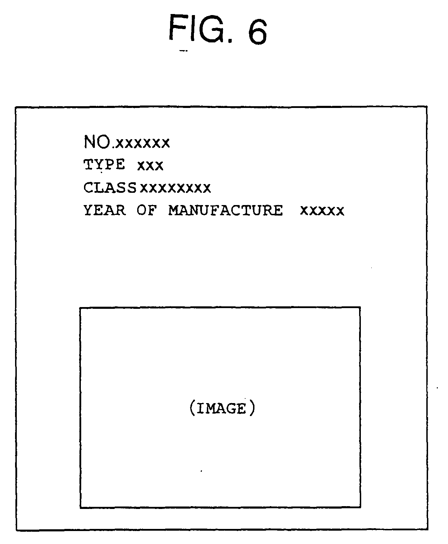

Then, automatic delivery shown in Fig. 3 is performed. BackWeb Infocenter 4.0 is for only delivering information desired by used car parts dealers and the like (the terminal 3 on the side of consumers of used cars 3) (stored in the push delivery server 9 in advance) and extracts only the desired information from the parts car database 6 to automatically prepare contents and transmit them to the dealer. Fig. 6 shows an example of information to be delivered to the terminal on the side of consumers of used cars and there are listed up type, classification, year of manufacture and video data. Further, automatic deletion due to the expiration of validity, categorization of cars such as a sedan, a wagon, an RV (recreational vehicle) and a truck, categorization by manufacturers, categorization by vehicle models or designation of colors and of years of manufacture are possible in the automatic delivery.

Then, when an auction is held, it is in the form of an electronic auction held on the web server 8 and, as a convenient way of an auction, it is set such that parts car data with a deadline set are delivered to each terminal 3 and a person who has offered the highest price by the deadline is automatically determined as a successful bidder.

In addition, when a used car supplier has a desired sales price of a used car, an auction may be held with the desired sales price as a reverse price.

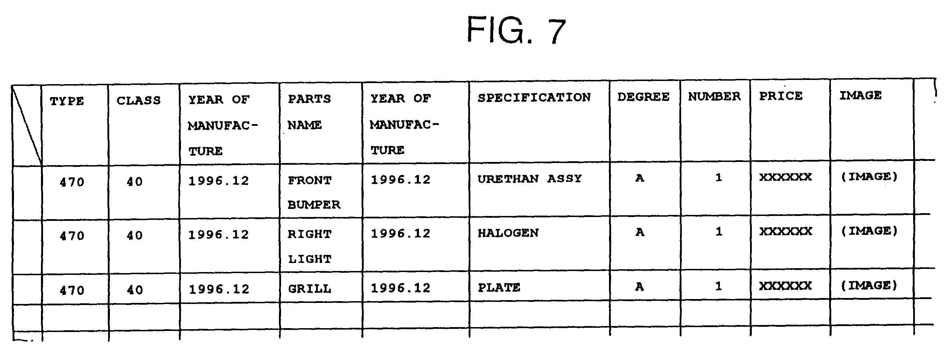

After the used car is knocked down, auto dismantlers and the like dismantle the vehicle to remove parts, a list of which is registered in the integrated database 7. When registering in the integrated database 7, auto dismantlers may register the parts list easily in the following manner. That is, at the time when the car is knocked down at the auction, a detailed parts list corresponding to the vehicle that has been knocked down in the vehicle database 5 is transmitted to the terminal on the side of consumers of used cars from the main server 1. Then, in the terminal 2 on the side of consumers of used cars, data of the removed parts are prepared by simply inputting it in accordance with the above-mentioned parts list, transmitted to the main server 1 and registered in the integrated database 7. Fig. 7 shows an example of used parts data registered in the integrated database 7, in which types, classifications, years of manufacture as well as names of parts, specifications, degrees of deterioration, the number of parts, video data and so on are registered.

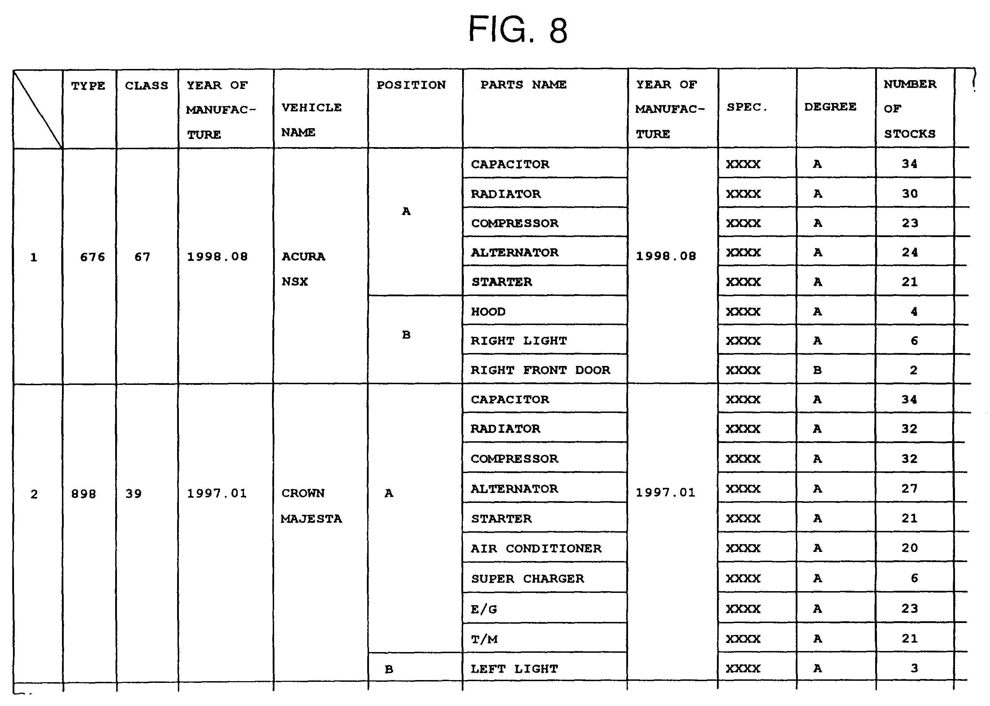

Fig. 8 shows an example of a used parts database established in this way. Vehicle information of the registered parts data can be easily retrieved by "a type designating number", "a class division number" and "a year of manufacture".

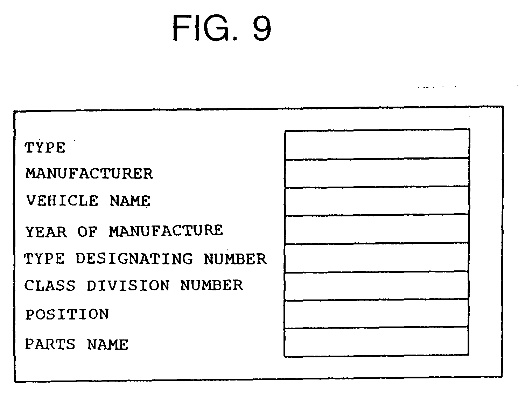

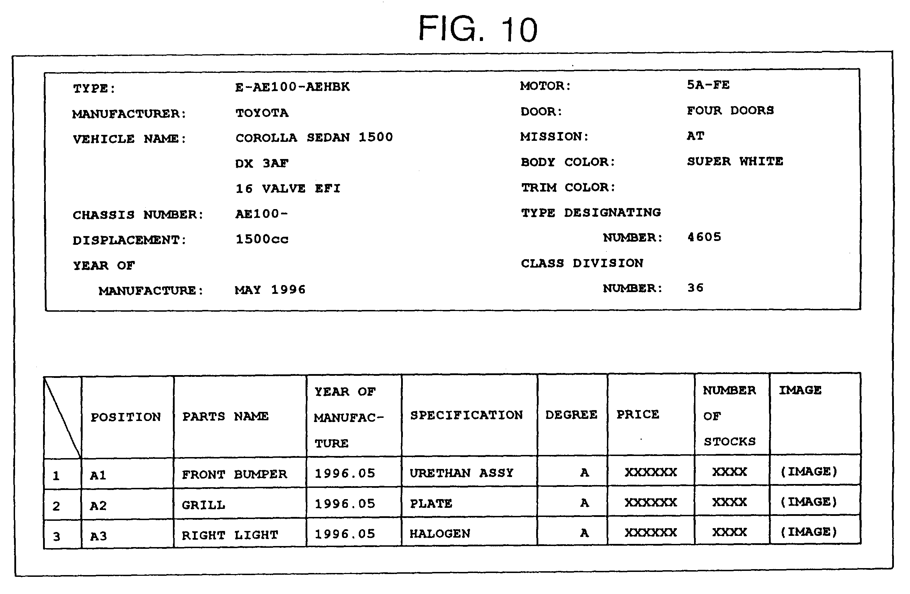

When utilizing the database, each terminal performs retrieval on a retrieval screen shown in Fig. 9 (an access from each terminal to the integrated database 7) and obtains detailed parts information shown in Fig. 10. Sale price and video data of the respective parts are included in the detailed parts information.

Since those who utilize the system including general consumers can access via the Internet to the database for the retrieval of information on used parts, it becomes possible for anybody to easily purchase used parts.

Since distribution and utilization of used parts are secured in this way, parts cars have values as resources and it is expected that illegally abandoned automobiles would decrease. In addition, since degraded stocks of used cars and used parts also decrease, it also has an effect to lower sales costs, repair costs and so on.

A system and a method for promoting distribution of used parts are thus provided. One skilled in the art will appreciate that the present invention is not limited to the preferred embodiments that are presented for the illustration purpose only, but that various modifications are possible without leaving the spirit of the present invention defined in the attached scope of claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system for promoting distribution of used parts, wherein a main server, a terminal on the side of a used car supplier, a terminal on the side of a consumer of used cars and a terminal on the side of a user of used parts are connected over a network, and wherein
said main server is connected to: a first storing means for storing used car stock data transmitted from said terminal on the side of a used car supplier; a second storing means for storing detailed data of vehicles including parts list corresponding to the respective vehicle models; and a third storing means for storing used parts data transmitted from said terminal on the side of a consumer of used cars, said main server complementing the used car stock data based on the detailed data of vehicles in said second storing means corresponding to said used car stock data stored in said first storing means, and said main server transmitting the used parts data in said third storing means to said terminal on the side of a user of used parts.

2. A system for promoting distribution of used parts as claimed in claim 1, wherein said main server is equipped with auctioning means for selecting prospective purchase data with the highest price out of prospective purchase data transmitted from said terminal on the side of a consumer of used cars with respect to the used car stock data stored in said first storing means.

3. A system for promoting distribution of used parts as claimed in claim 1 or 2, wherein said main server is equipped with delivering means for receiving a used car reservation request from said terminal on the side of a consumer of used cars and for automatically delivering data of the corresponding used car to said terminal on the side of the consumer of used cars who made the request.

4. A system for promoting distribution of used parts as claimed in any one of claims 1 through 3, wherein said main server is equipped with delivering means for receiving a used parts reservation request from said terminal on the side of a user of used parts and for automatically delivering data of the corresponding used parts to said terminal of the user of used parts who made the request.

5. A system for promoting distribution of used parts as claimed in any one of claims 1 through 4, wherein each of vehicle data to be stored in said first storing means, said second storing means and said third storing means include at least type designation number data, class division number data and year of manufacture data for each data of the respective vehicle.

6. A method for promoting distribution of used parts by transmitting data of used cars and of used parts between a main server and a plurality of terminals connected over a network to promote distribution of used parts, said method comprising the steps of:
transmitting used car stock data from a terminal of a used car supplier to said main server;
complementing the used car stock data based on detailed data of vehicles including a parts list corresponding to the respective vehicle models;
transmitting the complemented used car stock data from said main server to a terminal of a consumer of used cars;
transmitting used parts data from said terminal of a consumer of used cars to said main server; and
transmitting the used parts data from said main server to a terminal of a user of used parts.

7. A method for promoting distribution of used parts according to claim 6, wherein, in the step of complementing the used car stock data, lacking data obtained through retrieval of data of the corresponding used car stock data in a storing apparatus storing detailed data of vehicles is added to the used car stock data transmitted from said terminal on the side of a used car supplier to said main server.
